# EUROPÄISCHE PATENTSCHRIFT

(11) **EP 0 688 923 B1**
(45) Veröffentlichungstag und Bekanntmachung des Hinweises auf die Patenterteilung: **01.10.1997**
(21) Anmeldenummer: 95109153.7
(22) Anmeldetag: 14.06.1995
(51) Int. Cl.: E04G 23/00, B08B 17/00, B09B 3/00, C04B 41/48

(54) **Verfahren zum Reinigen und Sanieren von Asbestzementplatten**
Method for cleaning and sanitizing asbestos cement slabs
Procédé de nettoyage et d'assainissement de plaques en asbeste-ciment

(30) Priorität: 14.06.1994 DE 4420635
(43) Veröffentlichungstag der Anmeldung: 27.12.1995
(73) Patentinhaber: Sika Chemie GmbH, D-70439 Stuttgart (DE)
(72) Erfinder: Gomm, Bernhard, D-70435 Stuttgart (DE)
(74) Vertreter: Wolf, Eckhard, Dr.-Ing.

(56) Entgegenhaltungen:
- EP-A- 0 455 866
- US-A- 4 369 203
- US-A- 5 034 075
- PATENT ABSTRACTS OF JAPAN vol. 16 no. 235 (M-1257) ,29.Mai 1992 & JP-A-04 049377 (NIPPON STEEL CHEM CO LTD) 18.Februar 1992,

## Beschreibung

Die Erfindung betrifft ein Verfahren zum Reinigen und Sanieren von Asbestzementplatten.

Es gibt noch eine Vielzahl von Gebäuden, die mit unbeschichteten oder mit abblätternden Altanstrichen versehenen Asbestzementplatten verkleidet und eingedeckt sind. Diese Platten sind meist grau, angewittert und verschmutzt und dadurch unansehnlich. Es besteht daher ein Bedarf, die Platten zu reinigen und gegebenenfalls zu streichen oder zu beschichten. Da die Feinstfasern des Asbest lungengängig und daher gesundheitsschädlich sind, sind bei der Reinigung und Sanierung von Asbestzementplatten Vorsichtsmaßnahmen zu treffen. Dies gilt vor allem dann, wenn deren Oberfläche verwittert ist. Deshalb ist die Dampfstrahlreinigung und die Hochdruckwasserreinigung von Asbestzementplatten nicht zulässig. Die Reinigung erfolgt heute meist drucklos durch Wasserberieselung verbunden mit mechanischem Reiben mittels Schwamm oder Bürste. Das Reinigungswasser muß in Auffangrinnen unmittelbar aufgefangen, abgeleitet und entsorgt werden. Zum Entsorgen wird das verschmutzte Wasser beispielsweise in ein Absetzbecken geleitet, in welchem der asbesthaltige Schmutz in einem Sumpf aufgefangen, mit Zement gemischt und nach der Verfestigung entsorgt wird. Bei diesem Verfahren wird als nachteilig empfunden, daß die Auffangsysteme sehr aufwendig sind und daß das Wasser schnell abtrocknet und die Asbestfasern wieder freigibt. Hinzu kommt, daß nach dem Reinigen der Oberfläche eine Nachbearbeitung, beispielsweise eine Grundierung und Beschichtung erfolgen muß.

Ausgehend hiervon liegt der Erfindung die Aufgabe zugrunde, ein Verfahren zu entwickeln, mit dem auch stark verschmutzte und verwitterte unbeschichtete Asbestzementplatten gefahrlos gereinigt und saniert werden können und bei welchem der dabei anfallende asbesthaltige Schmutz problemlos entsorgt werden kann.

Zur Lösung dieser Aufgabe wird gemäß der Erfindung vorgeschlagen,
- daß die Asbestzementplatten an ihrer verschmutzten und/oder verwitterten Oberfläche mit einem Reaktionsharz in pastöser Form flächendeckend beschichtet und benetzt werden,
- daß die auf diese Weise gebildete Reaktionsharzschicht während einer Wartezeit unter Viskositätserhöhung auf der Plattenoberfläche belassen wird,
- daß anschließend ein Teil der Reaktionsharzschicht in noch pastösem Zustand unter Mitnahme von eingebetteten losen Schmutz-, Staub- und/oder Faserteilchen von der Plattenoberfläche abgetragen, extern gesammelt und ausgehärtet wird,
- und daß der auf der Plattenoberfläche verbleibende Teil der Reaktionsharzschicht unter Verfestigung ihres Untergrundes ausgehärtet wird.

Als Reaktionsharz wird zweckmäßig Epoxidharz verwendet. Um die ausreichende Flächenüberdeckung besser überwachen zu können, ist es von Vorteil, wenn das Reaktionsharz mit einem vorzugsweise anorganischen Pigment eingefärbt wird. Um auch bei senkrechten Asbestzementplatten ein tropfenfreies Auftragen zu ermöglichen, wird vorteilhafterweise ein mit einem Thixotropiermittel gefülltes Reaktionsharz verwendet. Als Thixotropiermittel kommen beispielsweise faserförmiges Polyethylen, Glycerinderivate oder Silikatderivate in Betracht.

Das pastöse Reaktionsharz wird vorteilhafterweise mit einem Flächenstreicher auf die Plattenoberfläche aufgetragen, und zwar vorzugsweise mit einer Schichtdicke von 300 bis 600 µm. Zur Reinigung wird eine Flächenspachtel verwendet, mit der der eine Teil der Reaktionsharzschicht und der darin eingeschlossenen Schmutzpartikel vorzugsweise von unten nach oben von der Plattenoberfläche abgetragen wird. Je nach Schichtdicke werden hierbei 50 bis 90 % der Reaktionsharzschicht wieder abgetragen. Bei einer Topfzeit des Reaktionskunststoffs von 2 bis 5 Stunden wird bis zum Abtragen des Kunststoffs eine Wartezeit von 10 bis 100 Minuten eingehalten.

Der abgetragene Teil der Reaktionsharzschicht wird im noch pastösen Zustand zweckmäßig mit den abgelösten Schmutz-, Staub- und Faserteilchen verrührt und erst dann unter Einbindung dieser Teilchen ausgehärtet. In der ausgehärteten Form kann das ausgehärtete Harzmaterial problemlos als Hausmüll entsorgt werden.

Der auf der Plattenoberfläche verbleibende Teil der Reaktionsharzschicht dient zweckmäßig als Grundierung und Haftvermittler für eine Deckbeschichtung beispielsweise aus einer lichthärtenden Acrylatdispersion.

Das erfindungsgemäße Verfahren wird bevorzugt zum Reinigen und Versiegeln von Fassadenverkleidungen und Dacheindeckungen verwendet.

Im folgenden wird die Erfindung anhand der Zeichnung näher erläutert. Es zeigen
- Fig. 1: einen Ausschnitt aus einer verwitterten und verschmutzten unbeschichteten Asbestzementplatte in geschnittener Darstellung;
- Fig. 2: die Asbestzementplatte nach Fig. 1 mit einer Beschichtung aus pastösem aushärtbarem Reaktionsharz;
- Fig. 3: die Asbestzementplatte nach Fig. 1 und 2 mit ausgehärteter Harzgrundierung und Deckbeschichtung.

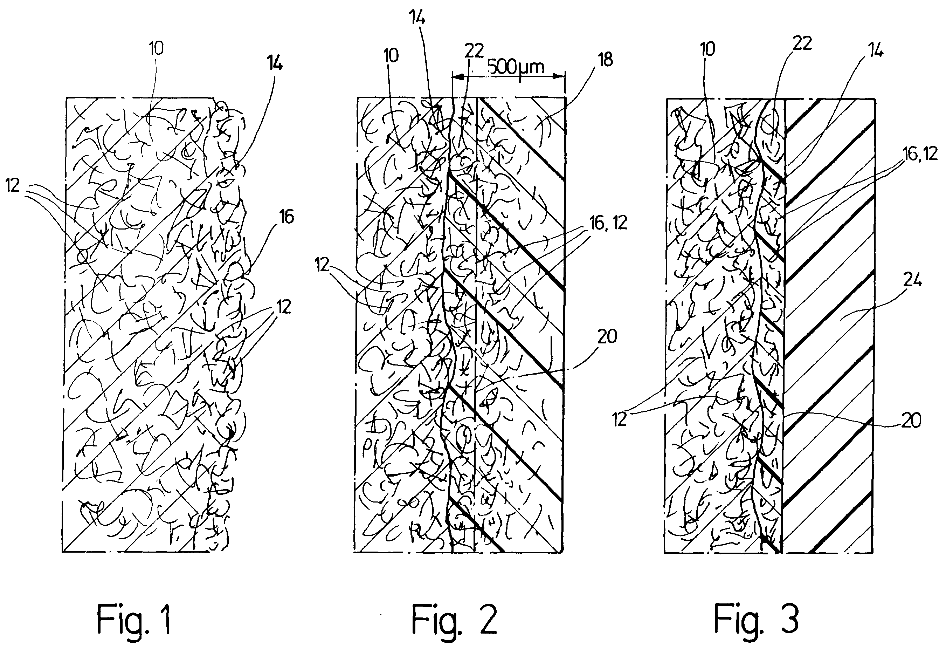

Die in Fig. 1 ausschnittsweise dargestellte Asbestzementplatte 10 weist eine feinfasrige Armierung aus Asbestfasern 12 auf. Asbestzementplatten dieser Art wurden in der Vergangenheit vielfach für Fassadenverkleidungen und Dacheindeckungen von Gebäuden verwendet. Da die Feinstfasern des Asbests lungengängig sind und daher gesundheitsschädlich sein können, wurde die Produktion asbestverstärkter Bauteile mittlerweise auf unschädliche Armierungsfasern umgestellt. Die Vielzahl der bereits verlegten unbeschichteten Asbestzementplatten bedürfen wegen ihrer Oberflächenverschmutzung und Verwitterung jedoch nach und nach der Reinigung und Sanierung. Die Fig. 1 zeigt eine solche Platte 10, die an ihrer verwitterten Oberfläche 14 eine Vielzahl Schmutzteilchen und Verwitterungstaub 16 sowie lose Asbestfasern 12 trägt.

Zur Reinigung und Sanierung der Plattenoberfläche 14 wird gemäß einem bevorzugten Ausführungsbeispiel ein Epoxidharzgemisch aus seinen Reaktionskomponenten Bisphenol-A und einem Polyaminhärter in stöchiometrischem Verhältnis angesetzt und im Lieferungsgebinde mit einem elektrischen Rührstab mindestens drei Minuten gemischt, bis eine homogene streichfähige Mischung vorliegt. Das Bisphenol-A ist mit einem grünen anorganischen Pigment eingefärbt und mit einem Thixotropiermittel aus Polyethylenfasern gefüllt. Die Topfzeit des auf diese Weise angesetzten Reaktionsgemischs beträgt zwei bis vier Stunden. Nach Fertigstellung des Gemischs wird eine aus unbeschichteten verwitterten und verschmutzten Asbestplatten der in Fig. 1 gezeigten Art bestehende Gebäudefassade mit einem Flächenstreicher mit dem pastösen Reaktionsharz eingestrichen. Dabei werden die Oberfläche 14 der Platten 10 und die darauf befindlichen Schmutz- und Staubteilchen 16 sowie Asbestfasern 12 mit dem Reaktionsharz benetzt bzw. in diesen eingebettet. Hierbei ergibt sich eine Reaktionsharzschicht 18 mit einer Schichtdicke von etwa 500 µm, was einer Beschichtungsmenge von etwa 500 g/m² entspricht. Etwaige Fehlbeschichtungen können an der durch die Einfärbung sich ergebenden Beschichtungsfarbe leicht erkannt und korrigiert werden.

Nach einer Wartezeit von etwa 30 bis 60 Minuten wird die in ihrer Viskosität schon etwas erhöhte aber immer noch pastöse Reaktionsharzschicht 18 mit einer Flächenspachtel bis zu der in Fig. 2 durch eine strichpunktierte Linie 20 angedeuteten Ebene zusammen mit den darin eingebetteten Schmutz-, Staub- und Faserpartikeln 16,12 von unten nach oben abgetragen und im Liefergebinde gesammelt. Dort wird das abgetragene Reaktionsharz mit den abgelösten Schmutz-, Staub- und Faserpartikeln unter Herstellung eines homogenen Gemischs verrührt und unter Einbindung dieser Partikel ausgehärtet. Nach etwa 24 Stunden kann das ausgehärtete Reaktionsharz als Hausmüll entsorgt werden.

Der auf der Oberfläche 14 der Asbestzementplatte verbleibende Anteil 22 des Reaktionsharzes verbindet sich beim Aushärten innig mit der Plattenoberfläche 14 unter Einbindung der dort noch vorhandenen Schmutz-, Staub- und Faserteilchen 16,12. Auf diese Weise ergibt sich eine Verfestigung der Plattenoberfläche. Die sich hierbei bildende Schicht 22 dient zugleich als Grundierung, die mit einer Deckschicht 24 beispielsweise aus einer einkomponentigen lichthärtenden Acrylatdispersion beschichtet werden kann (Fig. 3).

Zusammenfassend ist folgendes festzustellen: Die Erfindung bezieht sich auf ein Verfahren zum Reinigen und Sanieren von unbeschichteten Asbestzementplatten 10, die als Fassadenverkleidungen oder Dacheindeckungen von Gebäuden verwendet werden. Zunächst werden die Asbestzementplatten 10 an ihrer verschmutzten und/oder verwitterten Oberfläche 14 mit einem Reaktionsharz in pastöser Form flächendeckend beschichtet und benetzt. Die auf diese Weise gebildete Reaktionsharzschicht 18 wird sodann während einer Wartezeit von 30 bis 60 Minuten auf der Plattenoberfläche belassen. Anschließend wird ein Teil der Reaktionsharzschicht 18,20 in noch pastösem Zustand unter Mitnahme von eingebetteten losen Schmutz-, Staub- und/oder Faserteilchen 16,12 von der Plattenoberfläche 14 abgetragen, extern gesammelt und ausgehärtet. Der auf der Plattenoberfläche 14 verbleibende Teil 22 der Reaktionsharzschicht wird unter Verfestigung ihres Untergrundes ausgehärtet und dient in dieser Form als Grundierung für eine Deckbeschichtung 24.

## Patentansprüche

1. Verfahren zum Reinigen und Sanieren von Asbestzementplatten (10) an Bauwerken, **dadurch gekennzeichnet**, daß die Asbestzementplatten (10) an ihrer verschmutzten und/oder verwitterten Oberfläche (14) mit einem Reaktionsharz in pastöser Form flächendeckend beschichtet und benetzt werden, daß die auf diese Weise gebildete Reaktionsharzschicht (18) während einer Wartezeit unter Viskositätserhöhung auf der Plattenoberfläche (14) belassen wird, daß anschließend ein Teil der Reaktionsharzschicht (18,20) in noch pastösem Zustand unter Mitnahme von eingebetteten losen Schmutz-, Staub- und/oder Faserteilchen (16,12) von der Plattenoberfläche (14) abgetragen, extern gesammelt und ausgehärtet wird, und daß der auf der Plattenoberfläche (14) verbleibende Teil (22) der Reaktionsharzschicht (18) ausgehärtet wird.

2. Verfahren nach Anspruch 1, **dadurch gekennzeichnet**, daß als Reaktionsharz Epoxidharz verwendet wird.

3. Verfahren nach Anspruch 1 oder 2, **dadurch gekennzeichnet**, daß das Reaktionsharz mit einem vorzugsweise anorganischen Pigment eingefärbt wird.

4. Verfahren nach einem der Ansprüche 1 bis 3, **dadurch** **gekennzeichnet**, daß das Reaktionsharz mit einem Thixotropiermittel gefüllt wird.

5. Verfahren nach Anspruch 4, **dadurch gekennzeichnet**, daß als Thixotropiermittel faserförmiges Polyethylen, Glycerinderivat oder Silikatderivat verwendet wird.

6. Verfahren nach einem der Ansprüche 1 bis 5, **dadurch gekennzeichnet**, daß bei einer Topfzeit des Reaktionsharzes von 2 bis 5 Stunden eine Wartezeit von 10 bis 100 Minuten eingehalten wird.

7. Verfahren nach einem der Ansprüche 1 bis 6, **dadurch gekennzeichnet**, daß der abgetragene Teil der Reaktionsharzschicht (18,20) nach dem Aushärten vorzugsweise als Hausmüll entsorgt wird.

8. Verfahren nach einem der Ansprüche 1 bis 7, **dadurch gekennzeichnet**, daß der abgetragene Teil der Reaktionsharzschicht (18,20) in noch pastösem Zustand mit den abgelösten Schmutz-, Staub- und/oder Faserteilchen verrührt und erst dann unter Einbindung dieser Teilchen ausgehärtet wird.

9. Verfahren nach einem der Ansprüche 1 bis 8, **dadurch gekennzeichnet**, daß das pastöse Reaktionsharz auf die Plattenoberfläche (14) mit einem Flächenstreicher aufgestrichen wird.

10. Verfahren nach einem der Ansprüche 1 bis 9, **dadurch gekennzeichnet**, daß der eine Teil der Reaktionsharzschicht (18,20) mit einer Flächenspachtel schrittweise von unten nach oben von der Plattenoberfläche (14) abgetragen wird.

11. Verfahren nach einem der Ansprüche 1 bis 10, **dadurch gekennzeichnet**, daß die Reaktionsharzschicht (18) mit einer Schichtdicke von 300 bis 600 µm auf die Plattenoberfläche aufgetragen wird und daß hiervon anschließend ein Anteil von 50 bis 90 % abgetragen wird.

12. Verfahren nach einem der Ansprüche 1 bis 11, **dadurch gekennzeichnet**, daß der auf der Plattenoberfläche verbleibende Teil (22) der Reaktionsharzschicht (18) als Grundierung und Haftvermittler mit einer Deckbeschichtung (24) überzogen wird.

13. Verfahren nach Anspruch 12, **dadurch gekennzeichnet**, daß als Deckbeschichtung (24) eine lichthärtende Acrylatdispersion verwendet wird.

14. Verwendung des Verfahrens nach einem der Ansprüche 1 bis 13 zum Reinigen und Versiegeln von Fassadenverkleidungen und/oder Dacheindeckungen aus Asbestzement.

## Claims

1. A method for cleaning and refurbishing asbestos cement panels (10) on buildings, characterized in that the contaminated and/or weathered surface (14) of the asbestos cement panels (10) is wetted and coated with a pasty, reaction-curing resin, that the thus formed resin layer (18) is left on the panel surface (14) during a waiting time resulting in an increase of the viscosity, that part of the resin layer (18, 20) is subsequently removed from the panel surface (14) in still pasty consistency, incorporating embedded loose dirt, dust andlor fibre particles (16, 12), that the removed part of the layer is then collected and cured externally and that the part (22) of the reaction-curing resin layer (18) remaining on the panel surface is left to cure.

2. The method of claim 1, characterized in that an epoxy resin is used as reaction-curing resin.

3. The method of claim 1 or 2, characterized in that the reaction-curing resin is tinted, preferably with an anorganic pigment.

4. The method of one of claims 1 to 3, characterized in that the reaction-curing resin is filled with a thixotropic agent.

5. The method of claim 4, characterized in that polyethylene fibres, glycerine derivates or silicate derivates are used as thixotropic agents.

6. The method of one of claims 1 to 5, characterized in that a waiting time of 10 to 100 minutes is maintained with a reaction-curing resin having a pot life of 2 to 5 hours.

7. The method of one of claims 1 to 6, characterized in that the removed part of the resin layer (18, 20) is preferably disposed of as household rubbish after curing.

8. The method of one of claims 1 to 7, characterized in that the removed part of the reaction-curing resin is mixed with the removed dirt, dust and/or fibre particles whilst still having a pasty consistency and is subsequently cured, absorbing these particles.

9. The method of one of claims 1 to 8, characterized in that the pasty reaction-curing resin is applied to the surface of the panels (14) using a distemper brush.

10. The method of one of claims 1 to 9, characterized in that the one part of the reaction-curing resin layer (18, 20) is removed from the panel surface (14) step by step using a trowel and working from bottom to top.

11. The method of one of claims 1 to 10, characterized in that the reaction-curing resin layer is applied to the surface in a thickness of 300 to 600 µm and that 50 to 90 % of the layer are subsequently removed.

12. The method of one of claims 1 to 11, characterized in that the remaining part (22) of the resin layer (18) serves as a primer and coupling agent which is coated with a top coat (24).

13. The method of claim 12, characterized in that an UV-curing acrylate dispersion is used as the top coat.

14. The use of the method of one of claims 1 to 13 for cleaning or sealing of asbestos cement facade cladding and/or roofing.

## Revendications

1. Procédé pour le nettoyage et la rénovation de plaques en amiante-ciment (10) sur des bâtiments, caractérisé en ce que les plaques en amiante-ciment (10), sur leur surface sale et/ou rongée par les intempéries (14), sont enduites et mouillées intégralement d'une résine réactive pâteuse, que la couche de résine réactive (18) ainsi formée est laissée sur la surface (14) pendant un certain temps d'attente durant lequel sa viscosité augmente, qu'ensuite une partie de la couche de résine réactive (18, 20) encore pâteuse est enlevée, tout en emportant les particules non adhérentes de crasse, de poussière et/ou de fibres (16, 12) de la surface des plaques (14), est recueillie à part et laissée durcir et que la partie (22) de la couche de résine réactive (18) restant sur la surface (14) durcit.

2. Procédé selon la revendication 1, caractérisé en ce que comme résine réactive on utilise de la résine époxydique.

3. Procédé selon la revendication 1 ou 2, caractérisé en ce que la résine réactive est colorée avec, de préférence, un pigment inorganique.

4. Procédé selon l'une des revendications 1 à 3 caractérisé en ce que la résine réactive est chargée avec un agent de thixotropie.

5. Procédé selon la revendication 4, caractérisé en ce que comme agent de thixotropie on utilise du polyéthylène en forme de fibres, un dérivé de glycérine ou un dérivé de silicate.

6. Procédé selon l'une des revendications 1 à 5 caractérisé en ce que pour une vie en pot de la résine réactive de 2 à 5 heures on observe un temps d'attente de 10 à 100 minutes.

7. Procédé selon l'une des revendications 1 à 6 caractérisé en ce que la partie enlevée de la résine réactive (18, 20) est éliminée après durcissement, de préférence comme déchet ménager.

8. Procédé selon l'une des revendications 1 à 7 caractérisé en ce que la partie enlevée de la résine réactive (18, 20) est mélangée en état encore pâteux aux particules de crasse, de poussière et/ou de fibres et ne durcit qu'ensuite, tout en enrobant ces particules.

9. Procédé selon l'une des revendications 1 à 8 caractérisé en ce que la résine réactive pâteuse est appliquée sur la surface (14) des plaques au moyen d'une brosse plate.

10. Procédé selon l'une des revendications 1 à 9 caractérisé en ce qu'une partie de la couche de résine réactive (18, 20) est enlevée de la surface des plaques (14) progressivement du bas vers le haut, au moyen d'une spatule plate.

11. Procédé selon l'une des revendications 1 à 10 caractérisé en ce que la couche de résine réactive (18) est appliquée en épaisseur de 300 à 600 µm sur la surface des plaques et qu'ensuite une part de 50 à 90% est enlevée.

12. Procédé selon l'une des revendications 1 à 11 caractérisé en ce que la part (22) de la couche de résine réactive (18) demeurant sur la surface de la plaque sert de couche de fond et d'accrochage pour un revêtement de finition.

13. Procédé selon la revendication 12 caractérisé en ce qu'on utilise une dispersion acrylique photodurcissante comme revêtement de finition (24).

14. Utilisation du procédé selon l'une des revendications 1 à 13 pour le nettoyage et la rénovation de revêtements de façades et/ou de couvertures de toitures en amiante-ciment.
